# NEUE EUROPÄISCHE PATENTSCHRIFT

(11) **EP 1 528 987 B2**
(45) Veröffentlichungstag und Bekanntmachung des Hinweises auf die Entscheidung über den Einspruch: **24.12.2014**
(45) Hinweis auf die Patenterteilung: 03.11.2010
(21) Anmeldenummer: 03790848.0
(22) Anmeldetag: 01.08.2003
(51) Int. Cl.: B42D 25/00

(54) **DATENTRÄGER**
DATA CARRIER
SUPPORT DE DONNEES

(30) Priorität: 09.08.2002 DE 10237059
(43) Veröffentlichungstag der Anmeldung: 11.05.2005
(73) Patentinhaber: Giesecke & Devrient GmbH, 81677 München (DE)
(72) Erfinder: FRANZ, Peter, 85567 Pienzenau (DE); SCHMIDT, Rüdiger, 81673 München (DE)
(74) Vertreter: Vierheilig, Achim
(86) Internationale Anmeldenummer: PCT/EP2003/008544
(87) Internationale Veröffentlichungsnummer: WO 2004/020217

(56) Entgegenhaltungen:
- EP-A- 0 353 974
- WO-A-99/38038
- WO-A1-02/20268
- WO-A1-02/20280
- WO-A2-00/07356
- CA-A- 1 019 012
- CA-A- 1 066 109
- CA-A- 1 172 282
- DE-A- 19 900 856
- DE-A1- 19 900 856
- DE-C1- 3 602 563
- DE-C1- 3 602 563
- GB-A- 2 167 010
- US-A- 2 612 994
- US-A- 4 659 113
- US-A- 5 708 717
- US-A- 5 735 547
- US-A- 5 772 249
- US-B1- 6 176 521
- US-B1- 6 396 927
- V. OSTROMOUKHOV ET AL.: 'Anti-counterfeiting features of artistic screening' PROC. SPIE Bd. 2951, 1996, Seiten 126 - 133
- Y. PNUELI ET AL.: 'Gridless Halftoning: A Reincarnation of the Old Method' GRAPHICAL MODELS AND IMAGE PROCESSING Bd. 58, Nr. 1, 1996, Seiten 38 - 64

## Beschreibung

Die Erfindung betrifft einen Datenträgergemäß des Oberbegriffs von Anspruch 1.

Die Strukturelemente bilden ein regelmäßiges Linienraster. Jedes Strukturelement weist üblicherweise eine Mittellinie auf, bezüglich welcher die Breite des jeweiligen Strukturelements moduliert ist, um einen gewünschten Tonwert des Halbtonbilds wiederzugeben. Je breiter ein Abschnitt des Strukturelements ist, desto dunkler wirkt der dadurch repräsentierte Tonwert.

In der EP 0 710 574 A2 wird diese Art der Halbtonbilddarstellung als Echtheitsmerkmal zum Zweck des Kopierschutzes von Wertpapieren eingesetzt, indem der Rasterabstand der Strukturelemente, das heißt, der Rasterabstand ihrer jeweiligen Mittellinien über das Bild nicht konstant ist, sondern entsprechend einer Modulationsfunktion variiert wird. Dadurch wird erreicht, dass der Rasterabstand zumindest in Teilbereichen des Halbtonbilds dem Abtastraster eines zur Vervielfältigung des Wertpapiers verwendeten Kopierers oder Scanners entspricht, wodurch in dem entsprechenden Teilbereich der erzeugten Kopie ein auffälliges Moirémuster auftritt.

Die folgenden Dokumente offenbaren Halbtonbilder (im breitesten Sinne) mit linienförmigen Strukturelementen, die einseitig eben und einseitig breitenmoduliert sind, aber die sich vom Gegenstand des Anspruchs 1 unterscheiden: in WO 99/38038 A (Fig. 5) sind die Strukturelemente 8 und 9 nicht gedruckt, in US-B1-6 396 927 sind die "P" innerhalb ihrer Umrisskontour nicht vollflächig ausgeführt, und in EP-A-0 353 974 (Fig. 3) sind die Strukturelemente nicht parallel zueinander.

Die WO 97/17211 A1 zeigt einen Datenträger mit einer die Echtheit des Datenträgers kennzeichnenden, optisch variablen Struktur. Die optisch variable Struktur weist ein Prägeraster auf, das mit einer zur Oberfläche des Datenträgers kontrastierenden Beschichtung in Form einer linienförmigen Rasterstruktur so kombiniert ist, dass wenigstens Teilbereiche der Beschichtung bei senkrechter Betrachtung vollständig sichtbar sind, bei Schrägbetrachtung aber verdeckt werden. Bei abwechselnd senkrechter und schräger Betrachtung entsteht somit ein Kippeffekt, bei dem unter mindestens einem vorgegebenen Winkel eine erste Information erkennbar ist, die bei senkrechter Betrachtung nicht zu sehen ist.

Aufgabe der vorliegenden Erfindung ist es nun, die Linienrasterungstechnik für die Halbtonbilddarstellung zu modifizieren, um ein weiteres Echtheitsmerkmal für Wertdokumente zur Verfügung zu stellen, welches alternativ oder zusätzlich zu bekannten Echtheitsmerkmalen einsetzbar ist.

Diese Aufgabe wird durch einen Datenträger mit den Merkmalen des Anspruchs 1 gelöst. In davon abhängigen Ansprüchen sind vorteilhafte Weiterbildungen und Ausgestaltungen der Erfindung angegeben.

Während beim Stand der Technik die rasterartig angeordneten Linien des Halbtonbilds bezüglich ihrer Mittellinie gleichmäßig zu beiden Seiten der Mittellinie breitenmoduliert sind, sieht die Erfindung eine nur einseitige Breitenmodulation vor. Die Mittellinie wird zu einer Grundlinie. Dadurch sind die breitenmodulierten Linien an einer Seite, der Grundlinie, glatt bzw. eben und zur anderen Seite entsprechend dem gewünschten Grauwert breitenmoduliert. Im Normalfall wird die einseitige Breitenmodulation über die gesamte Länge einer Linie in dieselbe Richtung gehen. Von der Erfindung ausgenommen ist, dass auch einzelne Abschnitte der Linie in entgegengesetzter Richtung breitenmoduliert sein können. Dies wirkt sich auf den dadurch erzeugten Tonwert nicht aus und fällt dem menschlichen Auge auch nicht auf, wenn der Rasterabstand der Linien in der Nähe des Auflösungsvermögens des menschlichen Auges gewählt wird.

Bekanntlich wird die einseitige Breitenmodulation für einen ungeübten Beobachter nur bei genauester Betrachtung unter der Lupe erkennbar. Einem potentiellen Fälscher wird dieser Unterschied nicht ohne weiteres auffallen, und er wird daher zur Nachahmung die Standardrasterungstechnik verwenden, bei der die Linienbreite zu beiden Seiten einer Mittellinie moduliert ist. Sollte ein Nachahmer jedoch den Unterschied kennen oder erkennen, so wird er die einseitige Breitenmodulation nicht ohne weiteres realisieren können, weil dies mit Standardsoftware für die grafische Bildbearbeitung nicht möglich ist.

Darüber hinaus hat sich herausgestellt, dass das einseitig breitenmodulierte Rasterhalbtonbild im Vergleich zum beidseitigen breitenmodulierten Rasterhalbtonbild einen höheren Kontrast und eine detailliertere Wiedergabe ermöglicht. Die einseitig breitenmodulierte Rasterhalbtonbildumsetzung wird bevorzugt mit einer Rasterweite von 30 bis 60 Linien pro Zentimeter ausgeführt.

Als Halbtonbild im Sinne der vorliegenden Erfindung gelten nicht nur Wiedergaben von Motiven mit vielstufigen Tonwerten, wie beispielsweise Landschafts- oder Portraitwiedergaben, sondern auch Flächen die nur einfache grafische Strukturen wiedergeben und/oder nur wenige unterschiedliche Tonwerte aufweisen.

Die einseitig breitenmodulierte Rasterumsetzung kann sowohl einfarbig als auch mehrfarbig ausgeführt werden, wobei eine mehrfarbige Ausführung eines Motivs angelehnt an den Offsetdruck durch einen Zusammendruck einzelner Druckplatten mit unterschiedlichen Druckfarben erfolgt. Bevorzugt werden die Grundfarben Gelb, Magenta, Cyan und Schwarz gedruckt. Ebenso können auch zweifarbige Umsetzungen eines Motivs mit dem breitenmodulierten Raster erfolgen. Zum Beispiel kann ein erstes Raster mit Gelb und in einem weiteren Durchgang ein zweites Raster mit Blau gedruckt werden. Nach dem Zusammendruck entsteht bei geeignetem Beobachtungsabstand der optische Eindruck einer Vermischung von Gelb und Blau zu den entsprechenden Grüntönen.

Bei der einfarbigen Umsetzung eines einseitig breitenmodulierten Rasters wird für die Ausrichtung der Rasterlinien bevorzugt ein Winkel von 45° zur Horizontalen verwender. Bei mehrfarbigen Umsetzungen müssen die einzelnen Teilraster zueinander einen Winkel aufweisen, da sonst störende Muster auftreten können. Bevorzugt wird bei dreifarbigen Umsetzungen, beispielsweise in den Grundfarben Magenta, Cyan, Gelb, für die Rasterlinien in den einzelnen Farben ein Winkel von 15°, 45° und 75° zur Horizontalen verwendet.

Mit der einseitig modulierten Rasterungstechnik lassen sich weitere vorteilhafte sicherheitstechnische Merkmale erzielen, insbesondere ein effektiver Kopierschutz.

Eine nicht durch die Erfindung abgedeckte Ausführungsform sieht zum Zweck des Kopierschutzes vor, dass benachbarte Strukturelemente in entgegengesetzte Richtungen breitenmoduliert sind, so dass jeweils zwei Strukturelemente mit ihren glatten Seiten nebeneinander liegen. Wird nun der Abstand zwischen den glatten Seiten so gering gewählt, dass er kleiner ist als das Abtastraster eines zur Vervielfältigung verwendeten Kopierers oder Scanners, zum Beispiel kleiner 100 µm, so werden die entsprechenden nebeneinander liegenden Strukturelemente in der Kopie als ein einziges Strukturelement gemeinsam abgebildet.

Erfindungsgemäß wird das einseitig breitenmodulierte Rasterhalbtonbild mit einem zweiten Rasterhalbtonbild, welches vorzugsweise auch einseitig breitenmoduliert ist, so kombiniert, dass benachbarte Strukturelemente abwechselnd dem ersten Halbtonbild und dem zweiten Halbtonbild zugeordnet sind. Dadurch überlagern sich beide Halbtonbilder, so dass im günstigsten Fall weder das eine noch das andere unter normalen Betrachtungsbedingungen erkennbar ist.

Gemäß einer Variante sind die beiden Halbtonbilder in unterschiedlicher Farbe gedruckt. Dann lassen sie sich durch Verwendung eines Farbfilters unterscheiden, der entsprechend der Farbe des anderen Halbtonbilds gefärbt ist.

Erfindungsgemäß liegen benachbarte Strukturelemente der beiden Halbtonbilder auf benachbarten Flanken eines reliefartigen Substrats. Abhängig vom Betrachtungswinkel ist dann entweder nur das eine oder nur das andere Halbtonbild sichtbar, wohingegen sich die beiden Bilder bei Betrachtung von oben überlagern. Dieses Phänomen wird auch als "Kippeffekt" bezeichnet. Der Kippeffekt verschwindet auf einer Kopie des Wertdokuments. Eine detaillierte Beschreibung dieser Sicherheitstechnik findet sich in der WO 97/17211 mit zahlreichen Ausführungsbeispielen, die auch im Zusammenhang mit einseitig breitenmodulierten Linienraster-Halbtonbildern gemäß der vorliegenden Erfindung realisierbar sind.

Eine nicht durch die Erfindung abgedeckte Ausführungsform sieht vor, dass das Halbtonbild in Teilbereiche unterteilt ist, die mit bloßem Auge ohne weiteres erfassbar sind und die sich durch den Rasterabstand zwischen ihren linienartigen Strukturelementen unterscheiden (Rasterfrequenz). Dadurch sind die Strukturelemente an den Grenzen zwischen den Teilbereichen zueinander versetzt, was beim Kopieren oder Scannen zumindest in einigen Teilbereichen zu auffälligen Moirestrukturen führt. Dies ist im Detail in der WO 98/09825 erläutert, und auch die darin beschriebenen Ausführungsbeispiele sind im Zusammenhang mit einseitig breitenmodulierten Linienraster-Halbtonbildern gemäß der vorliegenden Erfindung realisierbar.

Gemäß einer nicht durch die Erfindung abgedeckten Ausführungsform ist in dem Halbtonbild ein weiteres Bild bzw. eine zusätzliche Information integriert, welche aber nur auf einer Kopie erkennbar wird. Dies wird erreicht, indem die Strukturelemente des Halbtonbildes im Bereich des darin integrierten Bildes zu einer anderen Seite breitenmoduliert sind als in dem an das integrierte Bild angrenzenden Bereich des Halbtonbildes. Auf das Erscheinungsbild des Originals wirkt sich dieser Unterschied nicht erkennbar aus, da der Tonwert davon nicht beeinflusst wird und der Rasterabstand im Grenzbereich des Auflösungsvermögens des menschlichen Auges oder darunter liegt. Beim Kopieren entstehen jedoch wieder auffällige Moirémuster an den Stellen, an denen das Halbtonbild und das darin verborgene Bild aneinander grenzen.

Schließlich sieht eine nicht durch die Erfindung abgedeckte Ausführungsform vor, das Halbtonbild als Barcode zu nutzen. Dies ist möglich, weil die Strukturelemente wegen ihrer einseitigen Breitenmodulation eine ebene Seite besitzen, die leicht und eindeutig identifizierbar ist. Die glatten Seiten definieren dann den Anfang und/oder das Ende eines Balkens, während der Abstand zwischen zwei aufeinander folgenden glatten Seiten die Breite bzw. den Informationsgehalt des Balkens angeben. Auch ein in zwei Richtungen lesbarer Balkencode ist realisierbar, wenn benachbarte Strukturelemente abwechselnd in die eine und die andere Richtung breitenmoduliert sind.

Vorteilhafte Weiterbildungen ergeben sich aus der nachfolgenden Beschreibung von besonderen Ausführungsbeispielen, die anhand der Figurenbeschreibung vorgenommen wird.

Im Einzelnen zeigen die Figuren:
- Fig. 1: eine Banknote in Draufsicht,
- Fig. 2: eine Halbtonvorlage zum Ausschnitt 3 aus Fig. 1,
- Fig. 3: eine Linienraster-Halbtondarstellung der Halbtonvorlage aus Fig. 2 nach dem Stand der Technik mit beidseitiger Breitenmodulation,
- Fig. 4: eine Linienraster-Halbtondarstellung der Halbtonvorlage aus Fig. 2 mit einseitiger Breitenmodulation,
- Fig. 5a: eine beidseitig breitenmodulierte Rasterlinie eines Halbtonbilds nach dem Stand der Technik,
- Fig. 5b: eine einseitig breitenmodulierte Rasterlinie eines Halbtonbilds,
- Fig. 6a bis 6f: verschiedene Ausgestaltungen einer einseitig breitenmodulierten Rasterlinie nach Fig. 5b,
- Fig. 7: einseitig breitenmodulierte Rasterlinien mit gleichem Rasterabstand,
- Fig. 8: einseitig breitenmodulierte Rasterlinien mit unterschiedlichem Rasterabstand,
- Fig. 9: eine in unterschiedliche Richtungen einseitig breitenmodulierte Rasterlinie,
- Fig. 10: eine gekrümmte, einseitig breitenmodulierte Rasterlinie,
- Fig. 11: eine gekrümmte, in unterschiedliche Richtungen einseitig breitenmodulierte Rasterlinie,
- Fig. 12: benachbarte Rasterlinien, die in entgegengesetzte Richtungen einseitig breitenmoduliert sind,
- Fig. 13: das Erscheinungsbild einer Kopie der Rasterlinien aus Fig. 12,
- Fig. 14: Rasterlinien von zwei einander überlagerten, einseitig breitenmodulierten Halbtonbildern,
- Fig.15: die Rasterlinien aus Fig. 14 aufgedruckt auf benachbarten Flanken eines reliefartigen Substrats,
- Fig.16a bis 16c: zwei unterschiedliche, einseitig breitenmodulierte Linienraster-Halbtonbilder, jeweils separat sowie in überlagerter Darstellung entsprechend Fig. 14,
- Fig. 17a, 17b: Varianten zur Anordnung der Rasterlinien von zwei überlagerten, einseitig breitenmodulierten Linienraster-Halbtonbildern,
- Fig.18a,18b: ein in einem einseitig breitenmodulierten Linienraster-Halbtonbild integriertes Bild,
- Fig.19a,19b: eine Variante der Breitenmodulation von Rasterlinien zur Darstellung von Tonwerten, die unter einem vorgegebenen Grenzwert liegen
- Fig. 20: ein in Teilbereiche unterteiltes Halbtonbild mit zueinander versetzter Rasterung,
- Fig. 21: ein in Teilbereiche mit unterschiedlichem Rasterabstand unterteiltes Halbtonbild, und
- Fig. 22a, 22b: einen vergrößerten Ausschnitt einer mehrfarbigen Rasterumsetzung.

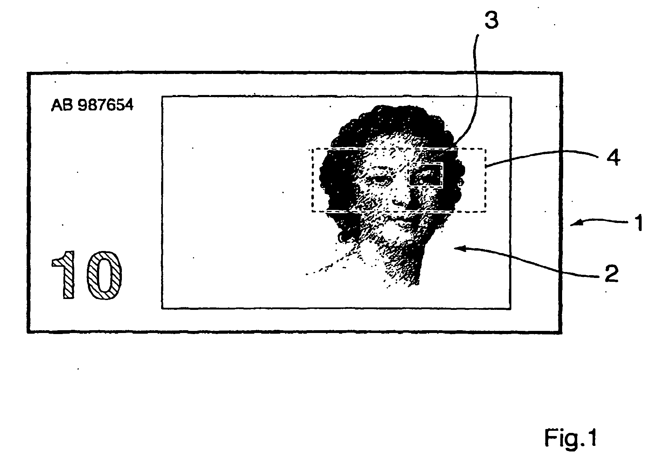

Fig. 1 zeigt als Beispiel für eines der eingangs genannten Wertdokumente eine Banknote 1 mit einem gedruckten Halbtonbild 2, in diesem Falle eine Person. Auf die beiden Ausschnitte 3 (Auge) und 4 (Gesichtspartie) wird nachfolgend zur weiteren Erläuterung der Erfindung Bezug genommen.

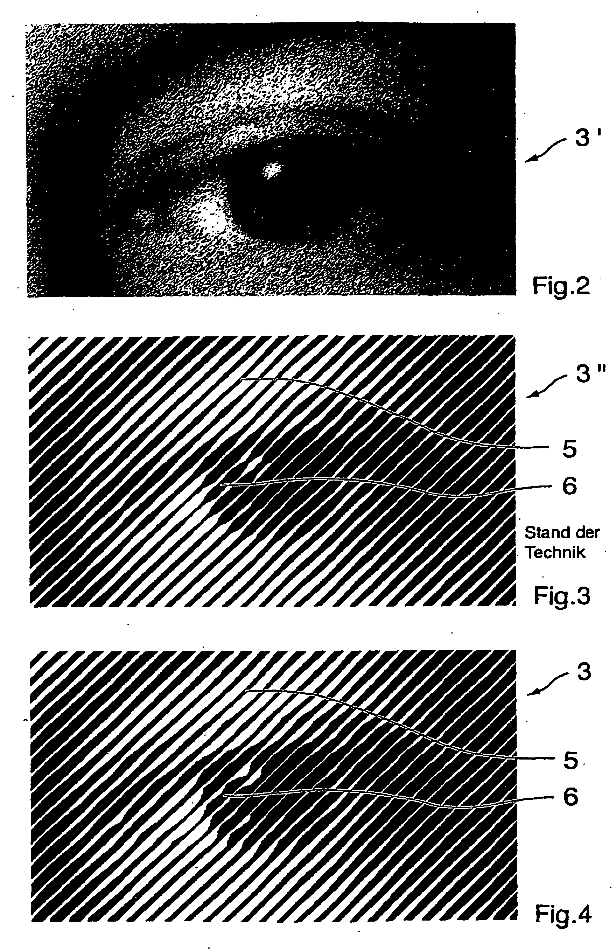

Fig. 2 zeigt eine Halbtonvorlage 3' auf deren Basis der Ausschnitt 3 des Halbtonbilds 2 aus Fig. 1 in ein Linienraster-Halbtonbild umgesetzt werden soll.

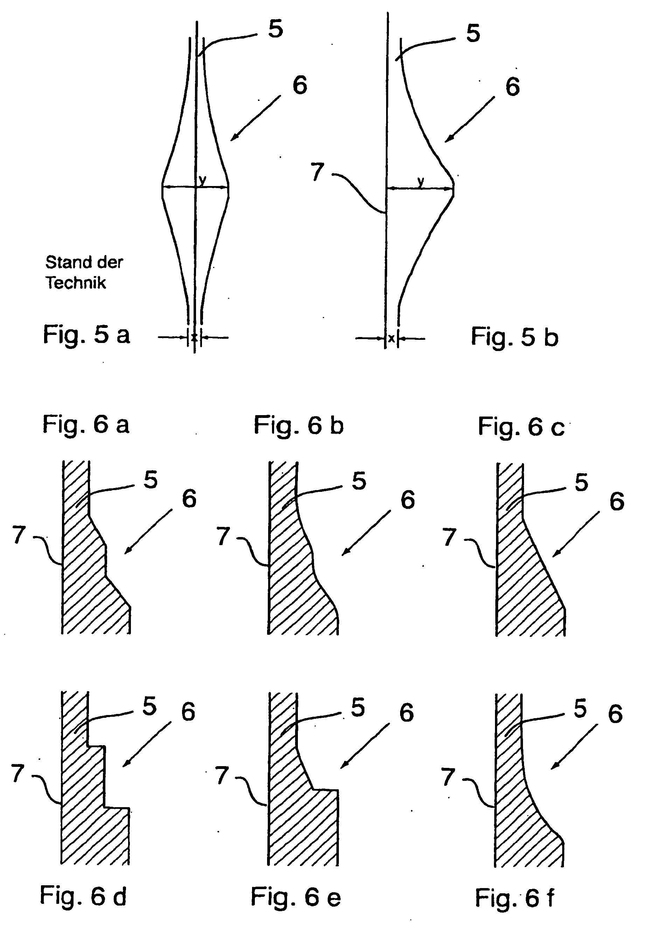

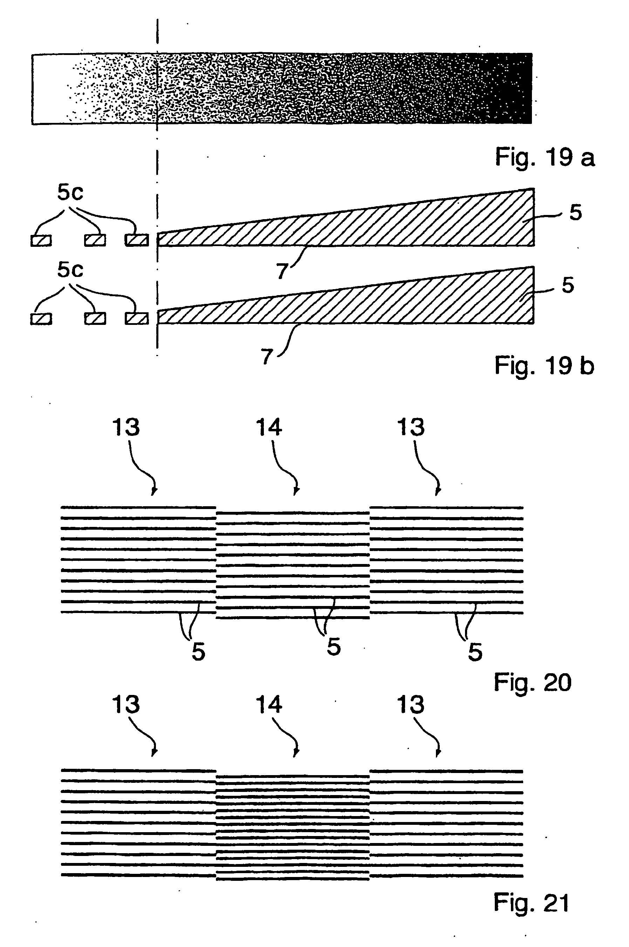

   Fig. 3 zeigt eine solche Linienraster-Darstellung 3" nach dem Stand der Technik (siehe z.B. DE 36 02 563 C1 (Fig. 6) oder DE 199 00 856 A1 (Fig. 19)). In diesem Fall besitzt jede Rasterlinie 5 eine Mindestdicke größer Null. Das heißt, weißen Bereichen der Halbtonbildvorlage wird bei der Linienrasterumsetzung ein minimaler Grauwert zugeordnet.

Darüber liegende Grauwerte, das heißt dunklere Tonwerte, wie beispielsweise die in der Halbtonvorlage schwarze Pupille werden durch entsprechende Modulation der Rasterlinienbreite umgesetzt. Man erkennt, dass die Rasterlinien 5 gemäß dem Stand der Technik gleichmäßig zu beiden Seiten einer Rastermittellinie breitenmoduliert sind.

Fig. 4 zeigt demgegenüber eine Linienraster-Halbtondarstellung der Halbtonvorlage aus Fig. 2. Demnach sind die breitenmodulierten Abschnitte 6 lediglich zu einer Seite der jeweiligen Rasterlinie 5 breitenmoduliert, die in diesem Ausführungsbeispiel ebenfalls eine Mindestdicke besitzt, die aber auch die Dicke Null haben könnte. Die Breite der Rasterlinien 5 ist in den breitenmodulierten Abschnitten 6 in den Fig. 3 und 4 identisch, so dass insgesamt derselbe Halbton realisiert wird. Dies wird bei Betrachtung der Fig. 2 bis 4, die jeweils eine etwa zehnfache Vergrößerung der Originalabbildung wiedergeben, unter ausreichendem Abstand deutlich.

Die Fig. 5a und 5b zeigen diesen Unterschied nochmals schematisch. Abgebildet ist jeweils eine Rasterlinie 5, wobei die Breite x der Rasterlinie 5 sowie die Breite y des entsprechenden breiterunodulierten Abschnitts 6 nach dem Stand der Technik (Fig. 5a) und gemäß der vorliegenden Erfindung (Fig. 5b) identisch sind. Wegen der erfindungsgemäß nur einseitigen Breitenmodulation ist die Rasterlinie 5 in Fig. 5b einseitig glatt bzw. eben. Diese glatte Seite wird nachfolgend als "Grundlinie" 7 der Rasterlinie 5 bezeichnet. Sie kann in etwa gleichgesetzt werden mit der Mittellinie der Rasterlinie 5 in Fig. 5a nach dem Stand der Technik.

In den Fig. 6a bis 6f sind unterschiedlichste Varianten zur Modulation der Breite der Rasterlinie 5 des einseitig breitenmodulierten Abschnitts 6 dargestellt. Der Übergang von einer Breite der Rasterlinie auf eine andere kann kontinuierlich (6c, 6f) oder in vorgegebenen Abstufungen (6a, 6b, 6d) erfolgen. Die Stufenübergänge können abrupt (6d), rampenförmig (6a, 6c), abgerundet (6b, 6f) oder in Mischformen (6e) erfolgen.

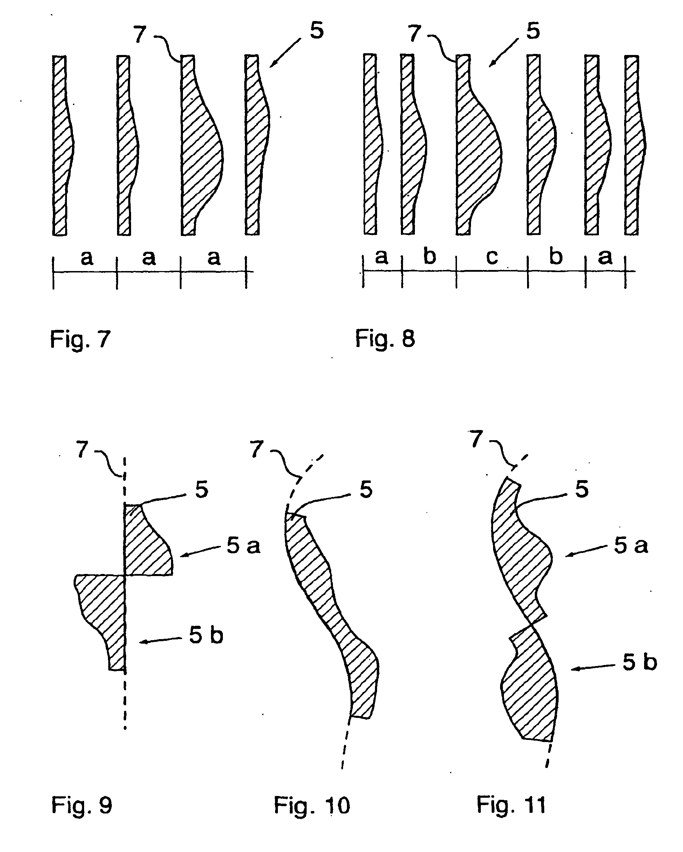

Die Fig. 7 bis 12 zeigen nicht zur Erfindung gehörende Grundtypen für einseitig breitenmodulierte Rasterlinienanordnungen. Fig. 7 zeigt benachbarte Rasterlinien 5 mit einem konstanten Rasterabstand a. Das heißt, der Abstand zwischen den Grundlinien 7 der Rasterlinien 5 ist bei dieser Ausführung über das gesamte Halbtonbild konstant. Der Rasterabstand kann aber auch variabel sein, wie in Fig. 8 anhand von unterschiedlichen Rasterabständen a, b, c dargestellt. Vorzugsweise ändert sich der Rasterabstand a, b, c zwischen benachbarten Rasterlinien 5 entsprechend einer stetigen Funktion, um eine optische Diskontinuität im Erscheinungsbild des Halbtonbilds zu vermeiden. Bei dem Ausführungsbeispiel gemäß Fig. 8 ist die Breite der Rasterlinien 5 von weit voneinander beabstandeten Rasterlinien entsprechend größer auszuführen als bei geringer beabstandeten Rasterlinien, um denselben Tonwert zu erzeugen, den ein Halbtonbild mit gleichmäßig beabstandeten Rasterlinien erzeugen würde.

Fig. 9 zeigt eine besondere Ausgestaltung einer einseitig breitenmodulierten Rasterlinie 5. In diesem Falle unterteilt sich die Rasterlinie 5 in Rasterlinienabschnitte 5a und 5b, die bezüglich der Grundlinie 7 in entgegengesetzter Richtung einseitig breitenmoduliert sind. Dies hat auf den dargestellten Tonwert keinen Einfluss und ist visuell umso weniger wahrnehmbar, je geringer der Rasterabstand gewählt wird.

Die Grundlinie 7 der Rasterlinie 5 muss nicht notwendiger Weise geradlinig sein. Sie kann auch geschwungen oder gekrümmt sein, wobei diese Krümmung im Gegensatz zur gegenüberliegenden, breitenmodulierten Seite der Rasterlinie 5 gleichmäßig ist, wie in Fig. 10 gezeigt. Selbstverständlich kann auch bei dieser Variante der Ausnahmefall gemäß Fig. 9 realisiert werden, bei dem einzelne Rasterlinienabschnitte 5a, 5b in unterschiedliche Richtungen bezüglich der Grundlinie 7 breitenmoduliert sind, wie in Fig. 11 dargestellt ist.

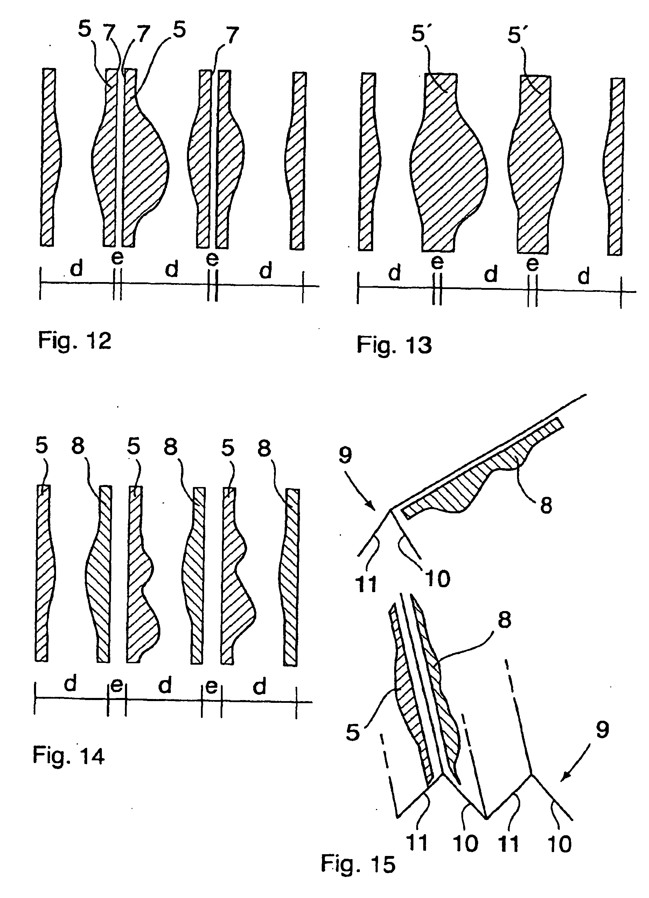

Fig. 12 zeigt eine Variante, bei der benachbarte, einseitig breitenmodulierte Rasterlinien 5 in entgegengesetzter Richtung breitenmoduliert sind, so dass jeweils zwei aufeinander folgende Rasterlinien 5 mit ihren ebenen Seiten bzw. Grundlinien 7 zueinander weisen. Im Falle einer gleichmäßigen Rasterung wechselt der Rasterabstand zwischen den Grundlinien 7 benachbarter Rasterlinien 5 abwechselnd zwischen einem Abstand d und einem kleineren Abstand e. Selbstverständlich sind auch bei dieser Variante die Rasterabstände variabel wählbar, wie in Bezug auf Fig. 8 erläutert, und die Grundlinien 7 können gekrümmt sein, wie in Bezug auf Fig. 10 erläutert.

Die Variante gemäß Fig. 12 kann besonders vorteilhaft zum Zwecke des Kopierschutzes eingesetzt werden, wenn nämlich der kleine Abstand e zwischen Rasterlinien 5, die mit ihren Grundlinien 7 zueinander weisen, so klein gewählt wird, dass sie bei einer Vervielfältigung mit einem Kopierer oder Scanner, dessen Abtastraster über dem Rasterabstand e liegt, nicht auflösbar sind. Auf einer Kopie würden dann die innerhalb der Abstände e liegenden weißen Flächen verloren gehen und die beiden daran angrenzenden Rasterlinien 5 als eine gemeinsame, breite Rasterlinie 5' wiedergegeben. Dadurch wird der Tonwert des betreffenden Bereichs verändert. Dies ist in Fig. 13 dargestellt. Ein solcher Kopierfehler wäre sowohl mit einer Lupe ohne weiteres erkennbar, als auch für einen Laien auffällig, da das menschliche Auge auf Tonwertabweichungen verhältnismäßig empfindlich reagiert.

Fig. 14 zeigt schematisch, wie die Rasterlinien zweier Linienraster-Halbtonbilder angeordnet werden können, um zwei Halbtonbilder in überlagerter Weise darzustellen. Die Rasterlinien des ersten Halbtonbilds sind mit der Bezugsziffer 5 und die Rasterlinien des zweiten Halbtonbilds mit der Bezugsziffer 8 gekennzeichnet. Die Rasterlinien 5 und 8 der beiden Halbtonbilder sind abwechselnd nebeneinander mit einem vorgegebenen Rasterabstand d, e angeordnet. Der Rasterabstand könnte aber auch variieren, wie in Bezug auf Fig. 8 erläutert. Bei den Rasterlinien 8 des zweiten Halbtonbilds handelt es sich, genau wie bei den Rasterlinien 5 des ersten Halbtonbilds, um einseitig breitenmodulierte Rasterlinien, wobei jeweils zwei benachbarte Rasterlinien entsprechend Fig. 12 mit ihren ebenen Grundlinien zueinander weisen. Es ist aber genauso möglich, die Rasterlinien 8 des zweiten Halbtonbilds als herkömmliche, beidseitig breitenmodulierte Rasterlinien auszubilden oder derart, dass die Rasterlinien 8 des zweiten Halbtonbilds in dieselbe Richtung breitenmoduliert sind, wie die Rasterlinien 5 des ersten Halbtonbilds. Die Rasterlinien 5 und 8 können im letztgenannten Fall wiederum einen gleichen oder einen unterschiedlichen Rasterabstand aufweisen, entsprechend den Darstellungen nach den Fig. 7 oder 8.

Eine überlagerte Darstellung zweier Halbtonbilder, wie in Bezug auf Fig. 14 erläutert, ist in Draufsicht nicht ohne weiteres erkennbar. Um die beiden sich überlagernden Halbtonbilder sichtbar zu machen, sieht eine Ausführungsform vor, dass die Rasterlinien 5, 8 in voneinander unterscheidbaren Farben vorliegen. Durch einen Farbfilter, der in einer der beiden Farben gefärbt ist, lässt sich dann das jeweils andere Halbtonbild betrachten.

Gemäß der Erfindung lassen sich die Rasterlinien 5 des ersten Halbtonbilds und die Rasterlinien 8 des zweiten Halbtonbilds getrennt voneinander sichtbar machen, indem sie auf benachbarten Flanken eines regelmäßigen Reliefs nach Art eines Kippbilds aufgebracht werden. Dann sind je nach Betrachtungswinkel entweder nur das erste oder nur das zweite oder aber gleichzeitig beide Halbtonbilder sichtbar. Dies ist in Fig. 15 in zwei unterschiedlichen perspektivischen Darstellungen gezeigt. Von dem reliefartigen Untergrund 9, auf dessen parallelen Flanken 10, 11 die Rasterlinien 5, 8 vorliegen, ist lediglich ein kleiner Ausschnitt stark vergrößert wiedergegeben. Die obere Darstellung in Fig. 15 zeigt eine perspektivische Ansicht aus einem Blickwinkel, bei welchem lediglich die Rasterelemente 8 auf den Flanken 10 erkennbar sind. Die auf den rückwärtigen Flanken 11 befindlichen Rasterlinien 5 des ersten Halbtonbilds sind durch das Relief 9 verdeckt. Die untere Darstellung in Fig.15 zeigt demgegenüber eine Perspektive aus einem Blickwinkel, aus welchem sowohl die Rasterlinien 8 des auf die Flanken 10 aufgebrachten zweiten Halbtonbilds als auch die Rasterlinien 5 des auf die rückwärtigen Flanken 11 aufgebrachten ersten Halbtonbilds im Blickfeld liegen, so dass sich die beiden Halbtonbilder überlagern.

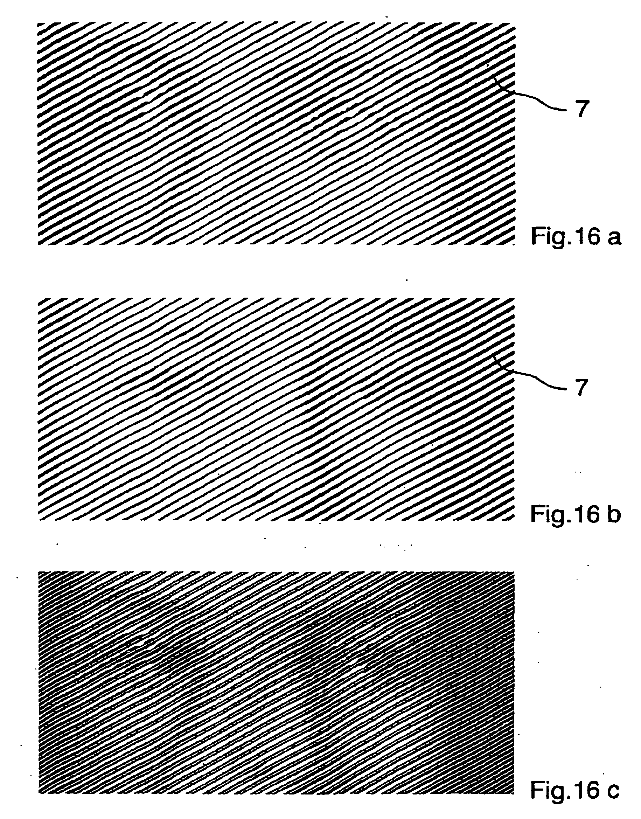

Die durch die Rasterlinien 5 und 8 dargestellten ersten und zweiten Halbtonbilder können identisch sein. Insbesondere können die Rasterlinien auf zwei zueinander benachbarten Flanken 10, 11 spiegelbildlich sein, so dass bei Betrachtung unter entgegengesetzten Blickwinkeln jeweils dasselbe Bild erkennbar wird und sich die Bilder bei Betrachtung von oben überlagern. Andererseits ist es auch möglich, zwei völlig verschiedene Halbtonbilder zu überlagern. Dies ist beispielhaft am Bildausschnitt 4 (Fig.1) in den Fig. 16a bis 16c gezeigt. Fig. 16a zeigt die Darstellung des Gesichtsausschnitts einer Frau als Linienraster-Halbtonbild und Fig. 16b zeigt den entsprechenden Gesichtsausschnitt eines Mannes ebenfalls als Linienraster-Halbtonbild. Der Rasterabstand der Rasterlinien ist in beiden Halbtondarstellungen identisch, und die Rasterlinien sind um denselben Winkel geneigt und verlaufen in die gleiche Richtung. Die Rasterlinien beider Halbtondarstellungen sind bezüglich ihrer jeweiligen Grundlinien 7 einseitig, jedoch in entgegengesetzter Richtung breitenmoduliert.

In Fig. 16c sind die beiden Halbtondarstellungen der Fig. 16a und 16b einander überlagert, wobei zwischen den aneinander grenzenden ebenen Grundlinien 7 benachbarter Rasterlinien ein geringfügiger Abstand von beispielsweise 50 µm eingestellt wird. Ein derart exakter Druck ist im Offsetverfahren möglich. Der Abstand ist so gering eingestellt, dass er kleiner ist als ein Abtastraster üblicher Kopierer oder Scanner. Dadurch wird erreicht, wie bereits in Bezug auf die Fig. 12 und 13 erläutert wurde, dass der geringfügige Abstand beim Kopieren verloren geht, so dass die Kopie von einem Original mittels einer Lupe einfach unterscheidbar ist.

Die folgenden Ausführungen betreffen sämtlich nicht zur Erfindung gehörende Ausführungsformen.

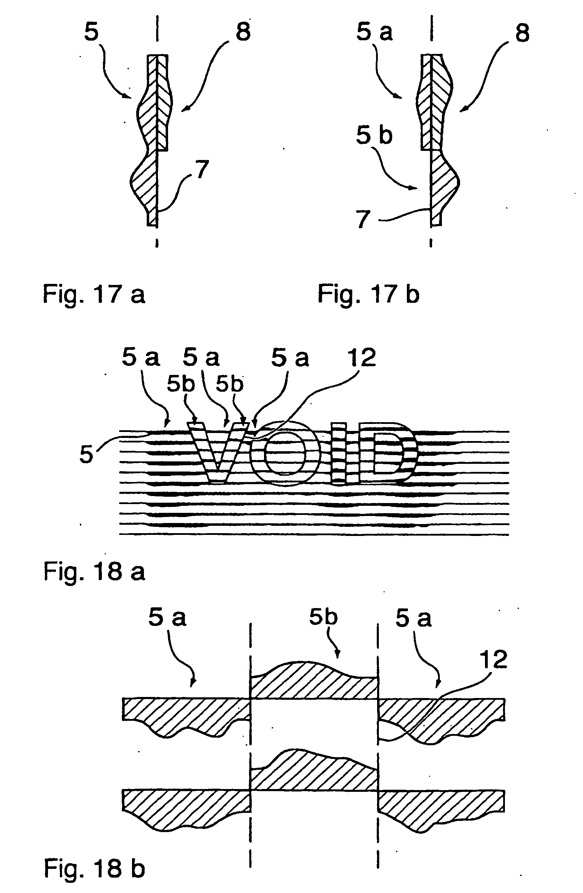

Selbstverständlich müssen die Rasterlinien 5 und 8 der beiden Halbtonbilder nicht notwendigerweise entsprechend Fig. 14 voneinander beabstandet sein. Sie können mit ihren ebenen Grundlinien 7 auch unmittelbar aneinander grenzen, wie in den Fig. 17a und 17b gezeigt ist.

Die einseitige Breitenmodulation der Rasterlinien eröffnet noch eine weitere vorteilhafte Kopierschutzmöglichkeit, die anhand der Fig. 18a und 18b erläutert wird. Fig. 18a zeigt wiederum einen Ausschnitt aus einem Linienraster-Halbtonbild, wobei beispielhaft lediglich einige Rasterlinien stark vergrößert dargestellt sind. Die Rasterlinie 5 sowie die dazu benachbarten Rasterlinien sind in Rasterlinienabschnitte 5a und 5b mit entgegengesetzter, einseitiger Breitenmodulation unterteilt, wie dies grundsätzlich anhand Fig. 9 bereits erläutert wurde. Die Rasterlinienabschnitte 5b mit gegenüber den Rasterlinienabschnitten 5a entgegengesetzter Richtung der Breitenmodulation liegen nur in einem Umriss 12 vor. Der Umriss 12 ist in Fig. 18a als Umrisslinie dargestellt, um den Bereich optisch hervorzuheben. Bei entsprechenden Realisierungen wird die Umrisslinie meist weggelassen. Der Umriss 12 definiert ein Bild bzw. eine Information in dem eigentlichen Halbtonbild, welches aber aus dem Halbtonbild optisch nicht hervortritt, da der Tonwert nicht dadurch beeinflusst wird, in welcher Richtung die Breite der Rasterlinie moduliert ist, und da die Rasterlinienabstände so klein gewählt sind, dass sie mit dem bloßen Auge nicht oder jedenfalls nicht ohne weiteres erkennbar sind. In Fig.18b sind zwei benachbarte Rasterlinien des Halbtonbildausschnitts aus Fig. 18a nochmals stark vergrößert dargestellt. Man erkennt, dass die Rasterlinienabschnitte 5a und 5b nur an jeweils einer Ecke aneinander angrenzen. Dieses exakte Aneinandergrenzen wird auf einer Kopie wegen des begrenzten Auflösungsvermögens von Kopierern und Scannern nicht exakt reproduziert. Statt dessen weist eine Kopie in diesen Grenzbereichen Moiremuster auf, durch die der Umriss 12 für das bloße Auge auffällig wird. Das heißt, der Betrachter einer Kopie wird in dem dargestellten Beispiel das Wort "VOID" sehen und dadurch erkennen, dass die Kopie ein ungültiges Wertdokument ist.

In den Fig. 19a und 19b ist eine Variante dargestellt, wie Tonwerte, die unter einem vorgegebenen Grauwert liegen, in eine Rasterlinie umgesetzt werden können. Fig. 19a zeigt einen Graukeil, welcher von rechts nach links alle von dunkel nach hell abnehmenden Grauwerte wiedergibt. Fig. 19b zeigt dazu beispielhaft zwei benachbarte Rasterlinien 5, deren Breite entsprechend dem abnehmenden Grauwert von rechts nach links keilförmig abnimmt. Ab einem bestimmten Grauwert werden darunter liegende Grauwerte nicht mehr durch eine schmaler werdende Rasterlinie, sondern durch voneinander beabstandete Rasterlinienabschnitte 5c wiedergegeben, wobei die Abstände zwischen den Rasterlinienabschnitten 5c mit weiter abnehmendem Grauwert zunehmen und/ oder die Länge der Rasterlinienabschnitte 5c mit weiter abnehmendem Grauwert abnimmt. Mit dieser Art der Tonwertumsetzung kann ein größerer Tonwertebereich wiedergegeben werden.

Die Fig. 20 und 21 zeigen eine weitere Möglichkeit des Kopierschutzes, die auf dem gleichen Prinzip basiert, wie der in Bezug auf die Fig. 18a, 18b erläuterte Kopierschutz. Beide Fig. zeigen einen Ausschnitt aus einem Halbtonbild, dessen Rasterlinien 5 einseitig breitenmoduliert sind. Die Modulation der Breite ist in den Fig. 20 und 21 jedoch nicht wiedergegeben. Der dargestellte Halbtonbildausschnitt ist in Teilbereiche 13 und 14 untergliedert.

Die Teilbereiche 13 und 14 in Fig. 20 unterscheiden sich voneinander dadurch, dass ihre Rasterlinien 5 bei gleichem Rasterabstand gegeneinander versetzt sind. Die Teilbereiche 13, 14 in Fig. 21 unterscheiden sich voneinander dadurch, dass ihre Rasterlinien 5 einen unterschiedlichen Rasterabstand besitzen. In beiden Fällen wird erreicht, dass in den Grenzbereichen zwischen den Teilbereichen 13 und 14 beim Kopieren Kopierfehler auftreten, die wiederum darauf zurückzuführen sind, dass Kopierer und Scanner mit einem definierten Abtastraster arbeiten. Auf der Kopie erscheinen daher im Grenzbereich zwischen den Teilbereichen 13,14 leicht erkennbare Moiremuster.

Schließlich ist es möglich, die einseitig breitenmodulierten Rasterlinien eines Halbtonbilds als Balkencode zu nutzen. Dies wird nachfolgend am Beispiel der Fig. 8 erläutert. Dabei definiert jede Grundlinie 7 den Anfang eines Balkens (oder das Ende eines Balkens) und der Abstand a, b, c etc. zwischen der Grundlinie 7 einer Rasterlinie 5 und der Grundlinie 7 der benachbarten Rasterlinie 5 steht für den Informationsgehalt, das heißt die Breite des Balkens. Die Leserichtung ist entweder von links nach rechts oder von rechts nach links.

Es besteht auch die Möglichkeit, einen in beide Richtungen lesbaren Balkencode zu erzeugen, wenn die Rasterlinien 5 in der in Fig. 12 dargestellten Weise angeordnet sind, so dass jeweils zwei benachbarte Rasterlinien 5 mit ihren ebenen Seiten 7 aneinander grenzen. In diesem Falle ist der Abstand e so groß zu wählen, dass die Grundlinien 7 zuverlässig erfassbar sind. Die Breite eines Balkens wird dann über den Abstand d definiert, der entsprechend den Erläuterungen zu Fig. 8 variabel einstellbar ist. Der Abstand e, der vorzugsweise konstant ist, dient als Trennlinie zwischen den so definierten Balken.

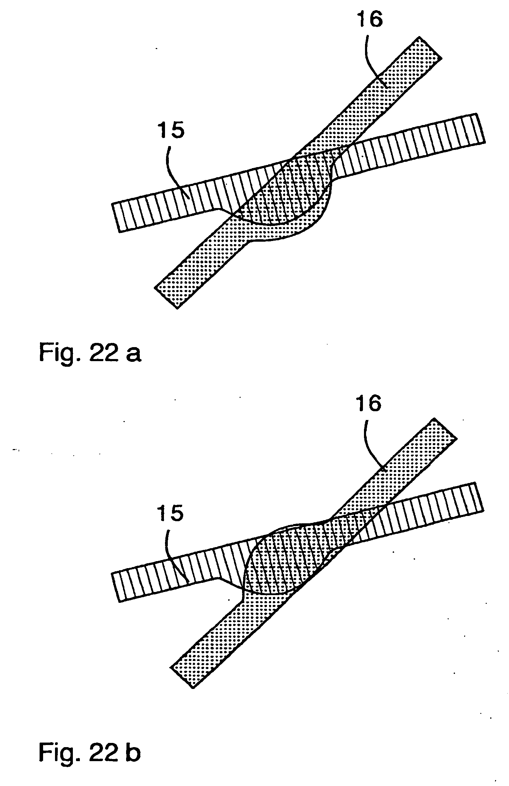

Die Fig. 22a und 22b zeigen exemplarisch für eine mehrfarbige Darstellung eines Motivs das Prinzip für eine zweifarbige Umsetzung. Die Figuren geben stark vergrößert einen Schnittpunkt von zwei unterschiedlich ausgerichteten Linien 15,16 wieder. Das gesamte Bild wird durch zwei Gruppen von Rasterlinien gebildet, die parallel zu den Rasterlinien 15 und 16 verlaufen. In dem Bereich, in dem die beiden in unterschiedlichen Farben ausgeführten Rasterlinien 15 und 16 überlappen, entstehen die gewünschten Mischfarben bzw. Sekundärfarben. Wegen der erfindungsgemäß nur einseitigen Breitenmodulation kann die Ausrichtung der Modulation für die unterschiedlich gefärbten Linien 15 bzw. 16 varüeren. Bei einer dreifarbigen Rasterumsetzung kreuzen sich in entsprechender Weise die Rasterlinien von drei unterschiedlich ausgerichteten und in verschiedenen Farben ausgeführten Linienrastern.

## Patentansprüche

1. Datenträger (1), insbesondere Wertdokument, mit wenigstens einem ersten durch beabstandete, gedruckte und innerhalb ihrer Umrisskontur vollflächig ausgeführte linienförmige Strukturelemente (5) dargestellten Halbtonbild (2), wobei ein gewünschter Tonwert des Halbtonbilds (2) durch geeignete Modulation der Breite (y) der linienförmigen Strukturelemente (5) realisiert wird, und wobei die linienförmigen Strukturelemente (5) parallel zueinander ausgerichtet sind und jeweils eine Grundlinie (7) umfassen, bezüglich der die Breite (y) moduliert ist, **dadurch gekennzeichnet dass** zumindest in einem Ausschnitt (3; 4) des Halbtonbilds (2) die Breite (y) der linienförmigen Strukturelemente (5) an jeder Stelle nur zu einer Seite der jeweiligen Grundlinie (7) moduliert ist, so dass die linienförmigen Strukturelemente (5) einseitig eben und einseitig breitenmoduliert sind und das Halbtonbild (2) mit einem zweiten Halbtonbild kombiniert ist, welches ebenfalls durch beabstandete, breitenmodulierte, linienförmige Strukturelemente (8) dargestellt ist, die benachbart und beabstandet zu den Strukturelementen (5) des ersten Halbtonbilds (2) so angeordnet sind, dass benachbarte Strukturelemente (5,8) abwechselnd dem ersten Halbtonbild (2) und dem zweiten Halbtonbild zugeordnet sind, wobei benachbarte Strukturelemente (5, 8) auf benachbarten Flanken (10,11) eines reliefartigen Trägermaterials (9) vorliegen.

2. Datenträger nach Anspruch 1, wobei auch das zweite Halbtonbild ein Halbtonbild mit den Merkmalen des ersten Halbtonbilds (2) ist.

3. Datenträger nach Anspruch 2, wobei benachbarte Strukturelemente (5, 8) zueinander kontrastierende Farben besitzen.

4. Datenträger nach Anspruch 1, wobei das erste Halbtonbild(2) und das zweite Halbtonbild identisch sind.

5. Datenträger nach Anspruch 1, wobei das erste Halbtonbild (2) und das zweite Halbtonbild unterschiedlich sind.

6. Datenträger nach einem der Ansprüche 1 bis 5, wobei benachbarte Strukturelemente (5; 5, 8) in entgegengesetzter Richtung bezüglich ihrer jeweiligen Grundlinie (7) breitenmoduliert sind.

7. Datenträger nach einem der Ansprüche 1 bis 6 in Gestalt eines Wertdokument s, ausgewählt aus der folgenden Gruppe von Wertdokumenten: Banknote, Scheck, Aktie, Ausweis, Eintrittskarte, Fahrkarte, Urkunde, Kreditkarte, Scheckkarte.

## Claims

1. A data carrier (1), in particular document of value, having at least a first halftone image (2) represented by spaced, printed linear structural elements (5) executed over the entire surface within their outline contour, wherein a desired tonal value of the halftone image (2) is realized by suitable modulation of the width (*y*) of the linear structural elements (5), and wherein the linear structural elements (5) are aligned parallel to each other and each comprise a baseline (7) with respect to which the width (*y*) is modulated, **characterized in that**, at least in a detail (3; 4) of the halftone image (2), the width (*y*) of the linear structural elements (5) is modulated at each place only on one side of the particular baseline (7) so that the linear structural elements (5) are flat on one side and width-modulated on one side, and the halftone image (2) is combined with a second halftone image likewise represented by spaced, width-modulated, linear structural elements (8) that are disposed neighboring to and spaced from the structural elements (5) of the first halftone image (2) such that neighboring structural elements (5, 8) are associated alternately with the first halftone image (2) and the second halftone image, wherein neighboring structural elements (5, 8) are present on neighboring flanks (10, 11) of a reliefed substrate material (9).

2. The data carrier according to claim 1, wherein the second halftone image is also a halftone image with the features of the first halftone image (2).

3. The data carrier according to claim 2, wherein neighboring structural elements (5, 8) have mutually contrasting colors.

4. The data carrier according to claim 1, wherein the first halftone image (2) and the second halftone image are identical.

5. The data carrier according to claim 1, wherein the first halftone image (2) and the second halftone image are different.

6. The data carrier according to any of claims 1 to 5, wherein neighboring structural elements (5; 5, 8) are width-modulated in opposite directions with respect to their particular baseline (7).

7. The data carrier according to any of claims 1 to 6 in the form of a document of value, selected from the following group of documents of value: bank note, check, share, identification document, admission ticket, travel ticket, certificate, credit card, check card.

## Revendications

1. Support de données (1), notamment document de valeur, comprenant au moins une première image en demi-teintes (2) représentée par des éléments structurels (5) en forme de lignes espacés, imprimés et pratiqués à pleine surface à l'intérieur de leur contour de profil, une valeur tonale souhaitée de l'image en demi-teintes (2) étant réalisée par modulation appropriée de la largeur (y) des éléments structurels (5) en forme de lignes, et les éléments structurels (5) en forme de lignes étant positionnés parallèlement les uns aux autres et comprenant respectivement une ligne de base (7) par rapport à laquelle la largeur (y) est modulée, **caractérisé en ce que**, au moins dans un fragment (3; 4) de l'image en demi-teintes (2), la largeur (y) des éléments structurels (5) en forme de lignes n'est, à chaque endroit, modulée que d'un côté de la ligne de base (7) respective, de telle sorte que les éléments structurels (5) en forme de lignes sont d'un côté plans et d'un côté modulés en largeur et que l'image en demi-teintes (2) est combinée à une deuxième image en demi-teintes qui est aussi représentée par des éléments structurels (8) en forme de lignes espacés et modulés en largeur qui sont agencés de telle sorte de manière adjacente et espacée par rapport aux éléments structurels (5) de la première image en demi-teintes (2) que des éléments structurels (5, 8) adjacents sont alternativement associés à la première image en demi-teintes (2) et à la deuxième image en demi-teintes, des éléments structurels (5, 8) adjacents se trouvant sur des flancs adjacents (10, 11) d'un matériau support (9) de style en relief.

2. Support de données selon la revendication 1, la deuxième image en demi-teintes étant aussi une image en demi-teintes ayant les propriétés de la première image en demi-teintes (2).

3. Support de données selon la revendication 2, des éléments structurels (5, 8) adjacents possédant des couleurs contrastant les unes avec les autres.

4. Support de données selon la revendication 1, la première image en demi-teintes (2) et la deuxième image en demi-teintes étant identiques.

5. Support de données selon la revendication 1, la première image en demi-teintes (2) et la deuxième image en demi-teintes étant différentes.

6. Support de données selon une des revendications de 1 à 5, des éléments structurels (5; 5, 8) adjacents étant modulés en largeur dans un sens opposé par rapport à leur ligne de base (7) respective.

7. Support de données selon une des revendications de 1 à 6 sous forme d'un document de valeur sélectionné parmi le groupe suivant de document de valeurs: billet de banque, chèque, action, pièce d'identité, carte d'entrée, ticket, acte, carte de crédit, carte bancaire.
